Europäisches Patentamt

European Patent Office

Office européen des brevets

(19)

(11) Publication number: **0 033 173**
**B1**

# EUROPEAN PATENT SPECIFICATION

(45) Date of publication of patent specification: **21.03.84**    (51) Int. Cl.³: **A 22 C  17/12**

(21) Application number: **81200043.8**

(22) Date of filing: **15.01.81**

(54) **Improved machine for the removal of membranes and/or skins from meats in general.**

(30) Priority: **25.01.80 IT 4680780**

(43) Date of publication of application:
**05.08.81 Bulletin 81/31**

(45) Publication of the grant of the patent:
**21.03.84 Bulletin 84/12**

(84) Designated Contracting States:
**AT BE CH DE FR GB LI LU NL SE**

(56) References cited:
**FR - A - 2 391 039**
**FR - A - 2 454 764**
**GB - A -  677 339**
**GB - A - 1 268 893**
**GB - A - 1 365 762**
**US - A - 2 037 253**
**US - A - 2 932 042**
**US - A - 3 394 421**
**US - A - 3 769 903**
**US - A - 3 862 682**

(73) Proprietor: **Grasselli, Giorgio**
**2, Via L. Roversi**
**I-42020 Albinea Reggio Emilia (IT)**

(72) Inventor: **Grasselli, Giorgio**
**2, Via L. Roversi**
**I-42020 Albinea Reggio Emilia (IT)**

(74) Representative: **Corradini, Corrado**
**STUDIO SECCHI & CORRADINI 4, Via Dante Alighieri**
**I-42100 Reggio Emilia (IT)**

Courier Press, Leamington Spa, England.

Improved machine for the removal of membranes and/or skins from meats in general

The present invention relates to improvements made in machines for removing skins and/or membranes, and which enable said skins or membranes to be easily and completely discharged immediately downstream of the zone in which they are detached, while leaving the brush perfectly clean.

The meat processing industry is known to widely use machines, the purpose of which is to remove from said meats those undesirable membrane layers which they usually contain.

For example, these types of machine are used for transforming liver, hearts, tongues and muscles, and also for transforming fish, poultry and any type of meat containing a membrane layer.

According to French Patent Application FR—A—2454764 a membrane removal machine is known, which is essentially constituted by a rotatable roller provided with saw-toothing, a blade, of which the cutting edge is disposed in an adjustable manner in proximity to the upper generating lines of said roller; a cylindrical brush disposed parallel to and below the roller and rotating in the same direction as this latter.

Furthermore, in a meat brushing device is known, from US—A—3394421 and US—A—2932042, to provide a comb disposed to the side of the brush, its teeth being inserted into the bristles of this latter in a zone located downstream of the longitudinal contact zone between said brush and the slice of meat. Attempts were made, to provide a comb according to the above mentioned US Patents, in a skinning machine of the type disclosed in the above mentioned French Patent, in order to remove the membrane layer from the bristles of the brush.

Notwithstanding, the machines of the aforesaid type suffer from the drawbacks described briefly hereinafter.

Firstly, it should be noted that these latter derive practically completely from the irrational configuration and arrangement of the comb relative to the cylindrical brush, or rather relative to the contact generating lines between the cylindrical brush and the rotatable roller. In this respect, in said known types of membrane removal machine, the teeth of said comb become involved with those bristles of the brush located downstream of said contact generating lines, i.e. when the free ends of the brushes have already removed the membrane layer from the roller which in its turn separates it from the piece of meat being transformed.

At this point it should be noted that, in the case of the aforesaid types of meat, the corresponding skins or membranes are usually very thin, and because of the fact that they are moistened by organic liquids have a strong tendency to adhere to any body with which they come into contact.

By virtue of this, it is immediately apparent that as soon as the membrane comes into contact with the cylindrical brush, it sticks to the bristles of this latter and penetrates a little between one bristle and another.

Downstream of this zone, the bristles penetrate to an ever increasing extent between the teeth of the comb which divides said bristles into a series of tufts or bunches, the component elements of which are squeezed against each other so that the membrane becomes gripped between them. Because of this, when the bristle tufts leave the comb, this latter retains only part of the membrane, i.e. substantially that part which is torn away between one tuft of bristles and another.

In short, when the bristles lose contact with the comb, they carry a piece of membrane adhering to them, and this is returned into contact with the toothed wheel for each rotation of the brush.

As the operation of known machines proceeds, this obviously gradually leads to an ever increasing clogging of the brush and a consequent increasing clogging of the rotatable toothed wheel.

In this manner, this latter loses its detachment capacity, i.e. the corresponding machine is no longer suitable for the purpose.

Serious drawbacks necessarily derive from the aforegoing, such as for example numerous stoppages of the machine during any given working day in order to reset the correct operating conditions, long cleaning operations on the toothed roller and brush, and loss of production of transformed meat with all the economic consequences seriously affecting the operation of the firm.

The main object of the present invention is to propose improvements to membrane removal machines in general which obviates the aforesaid drawbacks by means of a constructional design which is simple, rational, extremely reliable and practically free from clogging by the membranes of meats being processed.

The technical solution of the invention is to provide, for known machines of the aforesaid type, a detachment and cleaning member capable of involving a large part of the cylindrical development of the rotating brush, said large part comprising the bristle zone disposed upstream of the zone of contact between the brush and roller, the zone of periphery which defines said zone of contact and the bristle zone disposed downstream of said zone of contact.

More precisely, said detachment and cleaning member, for example of fork, prong or comb form of substantially semi-cylindrical development, is embedded or immersed by way of its own rod or tooth bodies into those bristles of the brush which define said zone of periphery respectively upstream of, in, and downstream of

2

said zone of contact, to finally emerge from the brush at a low point of this latter.

From the aforesaid, it is clearly apparent that in this manner the bristle tufts become constituted upstream of the zone of contact between the brush and roller so as to thus prevent penetration and pinching of the membranes between the bristles, so that the membranes are reliably and completely removed by the brush.

Moreover, according to a modification of the invention, the brushes are disposed on the cylindrical core of the brush along a helical line.

Finally, the brush core is hollow, is provided with bores along the generating lines, and is fed with water to give improved cleaning of the bristles from tacky membranes such as fish membranes.

The merits and constructional characteristics of the invention will be more apparent from the detailed description given hereinafter with reference to the figures of the accompanying drawings illustrating one particular preferred embodiment thereof by way of example.

Figure 1 is a partly sectional side view of the invention.

Figure 2 is a plan view thereof.

Figure 3 is a partial projection in the direction A of the previous Figure 1.

Figure 4 is a section on the line IV—IV of Figure 1.

Figure 5 is a partly sectional view of a brush with a perforated hollow core, the bristles being disposed helically.

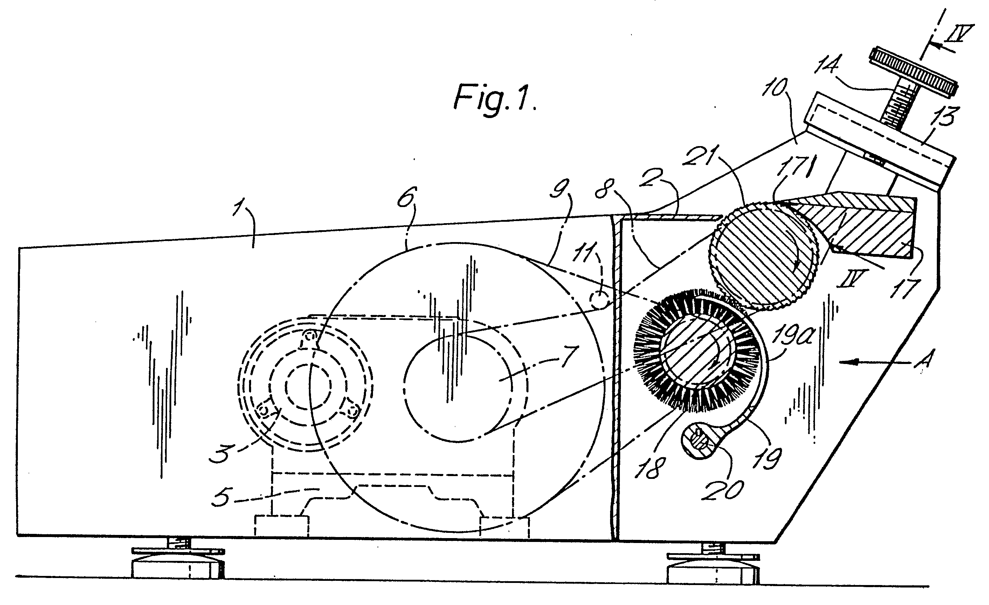

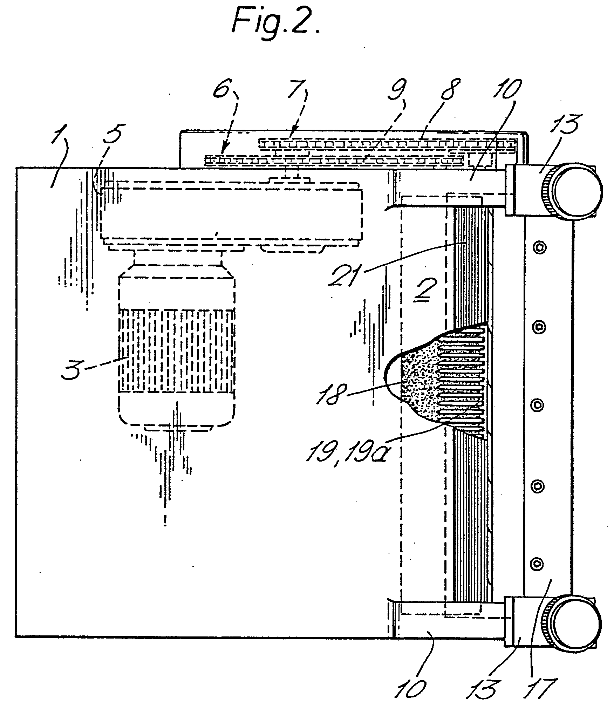

From said figures, and in particular Figures 1 and 2 taken together, it can be seen that the invention concerned comprises a casing 1 designed to house all the linkages provided for controlling the active parts or members of the machine.

In this respect, inside said casing 1 there is provided an electric motor of horizontal axis 3 disposed transversely to the longitudinal extension of the casing 1, its shaft being connected to a reduction gear 5.

On the outlet shaft of this latter there are keyed two sprocket wheels, the more inner one being indicated by the reference numeral 6, and the more outer one being indicated by the reference numeral 7 respectively.

From said figures it can also be seen that the wheel 6 has a mean diameter which is considerably greater than that of the outer wheel 7.

The inner wheel 6 is provided for driving a chain 9 which passes about a further sprocket wheel, not shown, keyed on to one end of a cylindrical brush 18 which is rotatably mounted relative to the sides of the casing 1.

Said cylindrical brush 18 occupies substantially the central line of the vertical extension of the casing 1. The outer sprocket wheel 7 is provided for driving a chain 8 which passes about a further sprocket wheel keyed on to one end of the axle of a roller 21, which in its turn is rotatably mounted relative to the sides of the casing 1.

The toothed roller 21, which is of the normal type in that all known membrane removal machines are provided therewith, is provided with saw-toothing, each component element of which longitudinally traverses said roller 21. Furthermore, said saw-teeth are inclined in the direction of rotation of said roller.

From the accompanying Figure 1, it can also be seen that the upper portion of the loop defined by the chain 8 is associated with a suitable chain tightening device 11.

From the same figure it can also be seen that the distance between the axes of the cylindrical brush 18 and roller 21 is such that the bristles of the cylindrical brush 18 are constantly in contact with a zone or band of lower generating lines of said roller 21.

With reference to the aforesaid linkages, it will be certainly apparent that the roller 21 and cylindrical brush 18 rotate in the same direction but at different speeds because of the different diameters of the sprocket wheels 6 and 7. More precisely, the member which has a greater rotational speed is the cylindrical brush 18, and said speed is at least double that of the roller 21.

Furthermore, this latter and the cylindrical brush 18 rotate in the clockwise direction in Figure 1.

The level of the roller 21 is such that part of its upper generating lines occupies a level which is higher than that of the working table 2, which for this purpose is provided with a suitable passage for said upper generating lines of the roller 21.

Again with reference to the accompanying Figure 1, downstream of the working table 2, from the sides of the casing 1 there branch two opposing profiled plates 10 of which the upper edge is subhorizontal and is provided with a male dovetail joint portion 12.

More precisely, said subhorizontal edge is inclined towards the zone downstream of the roller 21.

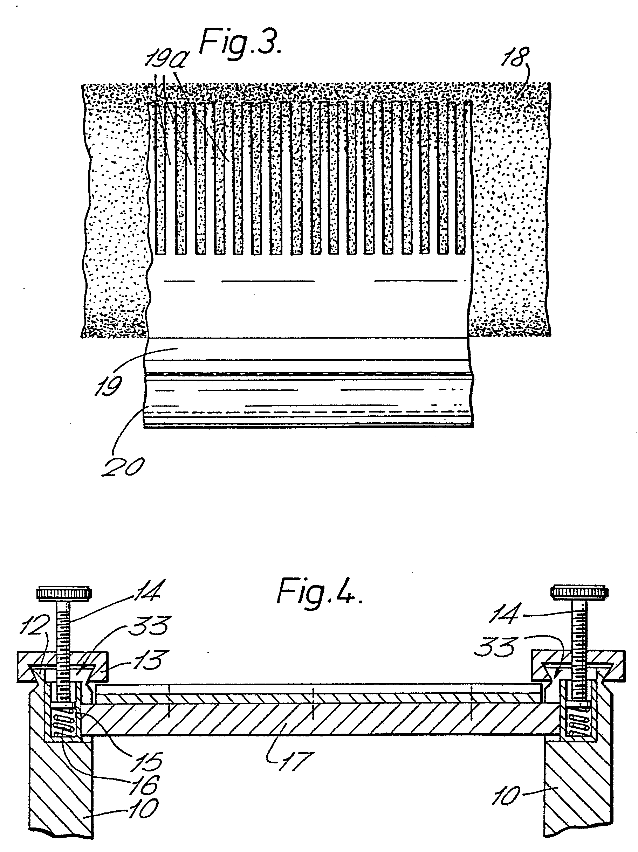

As can be better seen from Figure 4, to said dovetail joint portion 12 there connects a block 13, provided lowerly with a female dovetail seat.

Each block 13 is provided at that end facing the working table 2 with a transverse diaphragm arranged to act as a reaction member against the corresponding end of the profiled plate 10. Each profiled plate 10 is provided with a recess 33 which is open both towards the upper edge thereof and towards the inner face thereof.

In each of said recesses 33 there is freely disposed a socket 15, provided for containing a compression spring 16.

The upper end of this latter, the lower end of which is constantly in contact with the base wall of the corresponding socket 15, is in continuous contact with a disc provided at its lower end with a threaded pin 14 which is screwed into the corresponding block 13.

As can be clearly seen in the accompanying Figure 4, each threaded pin 14 is provided upperly with an adjustment knob. Again with reference to the accompanying Figure 4, the pair of sockets 15 is connected together by means of a horizontal blade support bar 17 which comprises two plates arranged to grip a convenient cutting blade or knife 171, not shown in greater detail because it is of known type.

With reference also to Figure 1, the blade of said knife 171 is disposed so that it substantially grazes the upper generating lines of the toothed roller 21.

Although not shown, at this point it should be explained that the position of said knife relative to the toothed roller 21 can be adjusted, however the corresponding adjustment means are not shown in detail in that they are of the known type usually used in membrane removal machines in general.

As can be better seen from Figure 1 and 3 taken together, below the cylindrical brush 18 there is disposed a horizontal axle 20 which is releasably fixed to the sides of the casing 1. Said axle 20 acts as a support for a comb, prong device or fork 19 consisting of a plurality of teeth 19a which are suitably spaced apart.

The free ends of the teeth 19a comprising the comb 19 are suitably tapered or pointed.

As can be clearly seen from the accompanying Figure 1, the comb 19 is of substantially semi-cylindrical shape, the curvature of which practically coincides with that of the outer cylindrical surface of the brush 18, but of which the axis is offset from that of said brush 18. The arrangement, configuration and length of the teeth 19a of the comb 19 are such that, starting from the point of connection of the comb to the axle 20, said teeth become increasingly embedded into the bristles which comprise the cylindrical brush 18.

More precisely, the free ends of the teeth of the comb 19 extend until they make contact with a zone of the periphery of the cylindrical brush 18 which is disposed upstream of the zone of contact between the cylindrical brush 18 and the roller 21.

Starting from the said zone, the comb 19 also involves said zone of contact between the brush 18 and the roller 21, and a zone disposed immediately downstream of the aforesaid zone of contact, to finally emerge smoothly to the outside of those bristles located very much downstream of the aforesaid zone of contact.

In short, starting from their zone of maximum insertion into the bristles of the brush 18, the curved teeth of the comb 19 becomes increasingly distant from the axis of the brush 18 until they finally emerge completely as stated heretofore.

In the light of the detailed description given heretofore, the operation of the device according to the invention is obvious in itself.

The operational stage which needs to be described is that relating to the aforesaid comb 19.

It is apparent that during the various operational stages, the saw-toothing of the roller 21 removes from the pieces of meat being processed those skins, membranes or scales which are not required.

As the rotation of the roller 21 proceeds, the membranes which have just been detached remain adhering or sticking to said roller 21, which feeds them towards the zone of contact which exists between it and the cylindrical brush 18.

This latter also moves in the same direction of rotation as the roller 21, but at a speed which is at least double that of this latter, and those bristles thereof which are not acted upon by the comb 19 are distributed in a normal manner, i.e. suitably spaced apart from each other.

However, before these free bristles reach the zone of contact between the elements 18 and 21, they become grouped into tufts by the teeth 19a of the comb 19, so that their free ends become compacted to form, as stated, a tuft which although preserving its natural flexibility and/or elasticity constitutes a particularly compact mass.

When these tufts, which as stated are particularly compact, reach said contact zone, they completely remove from the roller 21 those membranes which adhere to it and transfer them towards the axle 20.

As the bristles which comprise these tufts are practically completely in contact at their free ends, said membranes rest on these free ends without however penetrating between them, other than to a minimum extent, because of which the membranes are certainly prevented from becoming squeezed between one bristle and another.

As the rotation of the cylindrical brush 18 proceeds, the said tufts, continuously squeezed by the teeth 19a of the comb 19 as they were at the pointed free ends of the teeth 19a, move towards the zone where the comb 19 emerges from the brush 18, so that said comb removes all the membranes, even if small or thin, from the brush bristles.

The membranes removed in this manner fall to the base of the casing 1, where a convenient collector, not shown, is provided.

At this point it will be apparent that immediately downstream of the comb 19, the bristles of the brush 18 are completely cleaned, and this very advantageously enables the saw-toothing provided on the toothed roller 21 to also be kept constantly clean.

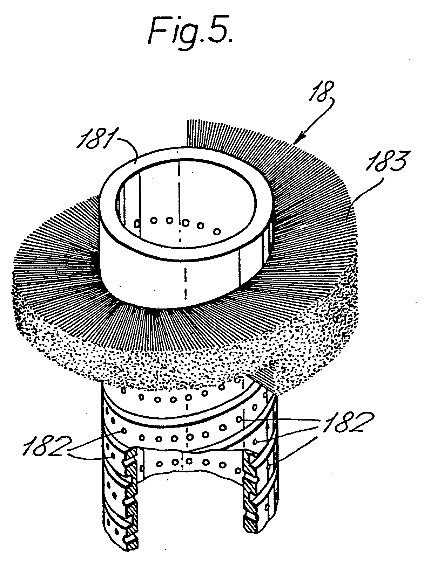

With particular reference to Figure 5, a brush 18 is shown having a hollow central core 181 provided with a series of nozzles 182 disposed on a helical line.

The bristles 183 are also disposed on a helical line so that the bores 182 lie between two rows of adjacent bristles.

This configuration means that each tuft of bristles reciprocates about the brush axis when it comes into contact with the comb 19, so improving the cleaning of the roller 21.

Water is fed through the perforated core and nozzles 182 if the membranes are sticky or tacky, such as fish membranes.

The brush support means and the water feed joints are omitted, as they are of usual type.

As stated heretofore, the axle 20 can be released from the casing 1 so as to withdraw the comb 19 for cleaning or washing.

It will be apparent that this withdrawal is carried out by rotating the comb 19 clockwise towards the bottom of the casing 1.

With reference to the accompanying Figure 4, the great advantage must be emphasised of a constructional design of the type represented, which after completely unscrewing the threaded pin 14, enables the blocks 13 to be withdrawn from the profiled plates 10, and the blade support bar 17 to be extracted for replacement, sharpening or maintenance purposes.

Moreover, the advantageous provision of the compression springs 16 enables the blade support bar 17 to adapt to the forces generated by the removal of the membranes, and the loading of the springs 16 which is transmitted to the blade support bar 17 can be adjusted according to the membrane thickness or strength by means of the threaded pins 14. In this manner, the blade support bar has a certain range of self-adjustment which enables it to adapt to resistances encountered during operation, and this range of self-adjustment can be set as stated heretofore by adjusting the loading of the springs 16.

## Claims

1. Machine for removing membranes and/or skins from meats in general, of the type comprising an adjustable horizontal blade (171) disposed at the end of a suitable working table (2), a rotatable roller (21) with saw-toothing, the upper periphery of which is adjustably located in proximity to the cutting edge of said blade (171), a cylindrical brush (18) disposed parallel to and below said roller, which rotates in the same direction as this latter and makes contact with it at a zone of its lower periphery, and a cleaning comb (19) partially embedded in the brush bristles, characterized by the comb (19) having a semi-cylindrical configuration, and of which the teeth (19a), which are partially embedded in the brush bristles, have a length such that their free ends involve the bristle zone disposed upstream of said zone of contact, their middle portions involve said zone of contact between the brush and roller, and their base portions involve the bristle zone disposed downstream of said zone of contact, so as to define, before contact takes place between the brush and roller bristle tufts of which the component elements are compacted against each other to constitute a flexible and elastic but particularly compact mass, which opposes the penetration of the membranes between the bristles.

2. Machine as claimed in claim 1, characterized in that starting from their free ends, which are suitably tapered or pointed, the teeth of the comb (19) are embedded or immersed in the brush bristles to a decreasing extent in moving from said upstream zone to the aforesaid downstream zone where they emerge from the bristles by way of their base portions.

3. Machine as claimed in claim 1, characterized in that said comb (19) is locked below the brush (18) on to a horizontal axle (20) which can be released from its own operating position in order to move the comb (19) of semi-cylindrical configuration completely outside the bristles of said brush.

4. Machine as claimed in claim 1, characterised in that the bristles (183) of the brush (18) are disposed on the core (181) in a helical configuration.

5. Machine as claimed in claim 1, characterized in that the adjustable horizontal blade (171) is supported by two sockets (15) rigid with the opposing ends of the blade support bar (17), they being housed in two recesses which are provided in the machine sides and are open both upperly and on the inner face of said sides; the upper edge of said sides, this edge being inclined towards the zone downstream of the roller, being provided with a dovetail joint portion (12) on which there is mounted a block (33) provided with a conjugate joint portion, into which there is orthogonally screwed a threaded adjustment pin (14) which, by way of a suitable end disc, makes contact with the upper end of a compression spring (16) which is inserted into the corresponding underlying socket.

## Patentansprüche

1. Maschine zum Abtrennen der Membranen und/oder der Schwarte von Fleisch im allgemeinen, die ein einstellbares horizontales, am Ende eines geeigneten Arbeitstisches (2) angeordnetes Messer (171), eine drehbare Walze (121) mit Sägezahnung, dessen oberer Umfangsbereich einstellbar in der Nähe des Schnittrandes des Messers (171) angeordnet ist, eine zylindrische, parallel zu und unterhalb der Walze angeordnete Bürste, die in der gleichen Richtung wie diese rotiert und mit einem unteren Umfangsbereich in Kontakt steht und ein Reinigungskamm (19), der teilweise in die Bürstenborsten eingebettet ist, aufweist, dadurch gekennzeichnet, daß der Kamm (19) eine halbzylindrische Ausgestaltung aufweist, wobei dessen Zähne (19a), die teilweise in die Borstenbürsten eingebettet sind, eine derartige Länge besitzen, daß ihre freien Enden den über den genannten Kontaktbereich angeordneten Borstenbereich, ihre mittleren Abschnitte, den Kontaktbereich zwischen der Bürste und der Walze und ihrer Basisbereiche den unterhalb des Kontaktbereiches angeordneten Borstenbereich umhüllen, so daß vor einer Kontaktaufnahme zwischen der Bürste und der Walze Borstenbüschel gebildet werden, deren Bestandteile gegeneinander gepreßt werden, um eine flexible und elastische, jedoch besonders kompakte Masse zu bilden, die einem Eindringen der Membrane zwischen die Borsten entgegensteht.

2. Maschine nach Anspruch 1, dadurch gekennzeichnet, daß, beginnend von ihren freien Enden, die geeignet angeschrägt oder angespitzt sind, die Zähne des Kammes (19) in die Bürstenborsten in einem abnehmenden Ausmaße eingebettet oder eingetaucht sind, und zwar während der Bewegung von dem oberen Bereich bis zu dem unteren Bereich, wo sie durch ihre Basisteile aus den Borsten zum Vorschein kommen.

3. Maschine nach Anspruch 1, dadurch gekennzeichnet, daß der Kamm (19) unterhalb der Bürste auf einer horizontalen Welle befestigt ist, die aus ihrer eigenen Betriebslage entfernt werden kann, um den halbkreisförmigen Kamm (19) vollständig aus den Borsten der Bürste herauszubewegen.

4. Maschine nach Anspruch 1, dadurch gekennzeichnet, daß die Borsten (183) der Bürste (18) auf dem Kern (181) in einem schraubenförmigen Verlauf angeordnet sind.

5. Maschine nach Anspruch 1, dadurch gekennzeichnet, daß das einstellbare horizontale Messer (171) in zwei Hülsen (15) gelagert ist, die fest mit den gegenüberliegenden Enden einer Messerhalteschiene (17) verbunden sind, wobei die Hülsen (15) in zwei Aussparungen liegen, die an den Maschinenseiten angeordnet und sowohl nach oben als auch auf der Innenwand dieser Seiten offen sind und wobei der obere Rand der genannten Seiten, der gegen den Bereich unterhalb der Walze geneigt ist, mit einem Schwalbenschwanz-Verbindungsteil (12) versehen ist, auf dem ein Block (33) mit einem konjugierenden Gegenstück befestigt ist, in das im rechten Winkel eine Gewindeschraube (14) mittels einer geeigneten Endscheibe eingeschraubt ist, wobei die Gewindeschraube mit dem oberen Ende einer Druckfeder (16) in Verbindung steht, die in die korrespondierend darunter liegende Hülse eingesetzt ist.

**Revendications**

1. Machine pour l'élimination des peaux et membranes de viande en général du type comprenant une lame horizontale réglable (171) disposée à l'extrémité d'une table appropriée de travail (2) un rouleau rotatif (21) pourvu d'une denture en scie, dont la périphérie supérieure est située de façon réglable à proximité du tranchant de ladite lame (171), une brosse cylindrique (18) disposée paralèllement à et en dessous dudit rouleau, qui tourne dans la même direction que ce dernier et vient en contact avec lui dans une région de sa périphérie inférieure, et un peigne de nettoyage (19) en partie noyé dans les poils de la brosse, caractérisée en ce que le peigne (19) ayant une configuration semi-cylindrique, et ses dents (19a) qui sont partiellement noyées dans les poils de la brosse ayant une longueur telle que leurs extrémités libres viennent engager la région des poils disposée en amont de ladite région de contact, leurs parties médianes viennent engager ladite région de contact située entre la brosse et le rouleau, et leurs parties de base viennent engager la région des poils disposée en aval de ladite région de contact, de façon à définir avant que le contact ne s'effectue entre la brosse et le rouleau, des touffes de poils dont les éléments qui les composent sont compactés les uns contre les autres de façon à constituer des masses souples et élastiques mais particulièrement compactes qui s'opposent à la pénétration des membranes entre les poils.

2. Machine selon la revendication 1 caractérisée en ce que partant de leurs extrémités libres, qui sont convenablement aiguisées ou pointues, les dents du peigne (19) sont noyées ouenfouies dans les poils de la brosse sur une distance allant en diminuant lorsqu'on se déplace à partir de ladite région amont vers ladite région aval où ils émergent des poils au niveau de leurs parties de base.

3. Machine selon la revendication 1 caractérisée en ce que ledit peigne 19 est verrouillé en dessous de la brosse 18 sur un axe horizontal (20) qui peut être démonté de la position propre de fonctionnement de façon à déplacer le peigne (19) de configuration semicylindrique complètement en dehors des poils de ladite brosse.

4. Machine selon la revendication 1 caractérisée en ce que les poils (183) de la brosse 18 sont disposés sur le noyau (181) en une configuration en hélice.

5. Machine selon la revendication 1, caractérisée en ce que le lame horizontale réglable (171) est supportée par deux manchons (15) solidaires des extrémités opposées de la barre de support de lame (17), lesdits manchons étant logés dans deux cavités qui sont prévues dans les côtés de la machine et sont ouvertes à la fois sur les faces supérieure et inférieure desdits côtés; le bord supérieur desdits côtés, lequel bord est incliné vers la région aval du rouleau, comportant une partie de jonction (12) en queue d'aronde sur laquelle est monté un bloc (33) présentant une partie de jonction conjuguée, dans laquelle est vissée orthogonalement une goupille filetée de réglage (14) qui, au moyen d'un disque d'extrémité approprié, vient contacter l'extrémité supérieure d'un ressort de compression (16) lequel est introduit dans le manchon correspondant sousjacent.

Fig.1.

0 033 173

0 033 173

Fig.2.

2

## Fig.3.

19a 18

19

20

## Fig.4.

14 14

12 33 33

13

15

16

10 17 10

Fig.5.